# EUROPÄISCHE PATENTANMELDUNG

(11) **EP 3 543 991 A1**
(43) Veröffentlichungstag der Anmeldung: **25.09.2019**
(21) Anmeldenummer: 19158316.0
(22) Anmeldetag: 20.02.2019
(51) Int. Cl.: G09G 3/14

(54) **VORRICHTUNG UND VERFAHREN ZUR STEUERUNG EINER MEHRZAHL OPTISCHER ANZEIGEELEMENTE ZUMINDEST EINES ELEKTRONISCHEN GERÄTS**

(30) Priorität: 21.03.2018 DE 102018106708
(71) Anmelder: Pilz GmbH & Co. KG, 73760 Ostfildern (DE)
(72) Erfinder: von Haugwitz, Frank, 73760 Ostfildern (DE)
(74) Vertreter: Schäperklaus, Jochen

(57) **Zusammenfassung**

Die Erfindung betrifft eine Vorrichtung (1, 1') zur Steuerung einer Mehrzahl k≥2 optischer Anzeigeelemente (2.1-2.n, 2.1'-2n') zumindest eines elektronischen Geräts (10, 10'), wobei jedes der Anzeigeelemente (2.1-2.n, 2.1'-2n') dazu eingerichtet ist, zur optischen Anzeige eines Betriebsstatus des zumindest einen elektronischen Geräts (10, 10') und/oder einzelner Komponenten des zumindest einen elektronischen Geräts (10, 10') Licht zu emittieren, wobei die Vorrichtung (1) zumindest eine Auswerte- und Steuereinheit (3, 3') umfasst, die an die Anzeigeelemente (2.1-2.n, 2.1'-2n') angeschlossen ist und die dazu eingerichtet ist, die Intensitäten des von den Anzeigeelementen (2.1-2.n, 2.1'-2n') emittierten Lichts derart zu steuern, dass die Anzeigeelemente (2.1-2.n, 2.1'-2n') während eines Normalbetriebs Licht mit definierten, vorzugsweise im Wesentlichen identischen, Intensitäten emittieren und dass bei einer Bedienaktion des zumindest einen elektronischen Geräts (10, 10') ein oder mehrere Anzeigeelemente (2.1-2.n, 2.1'-2n'), die der Bedienaktion zugeordnet sind, durch Änderungen der relativen Intensitäten des von den Anzeigeelementen (2.1-2.n, 2.1'-2n') emittierten Lichts optisch hervorhebbar sind.

## Beschreibung

Die vorliegende Erfindung betrifft eine Vorrichtung und ein Verfahren zur Steuerung einer Mehrzahl k≥2 optischer Anzeigeelemente zumindest eines elektronischen Geräts, wobei jedes der Anzeigeelemente dazu eingerichtet ist, zur optischen Anzeige eines Betriebsstatus des zumindest einen elektronischen Geräts und/oder einzelner Komponenten des zumindest einen elektronischen Geräts Licht zu emittieren.

Optische Anzeigeelemente, insbesondere Leuchtdioden, dienen dem Zweck, einem Benutzer beispielsweise unterschiedliche Betriebszustände zumindest eines elektronischen Geräts und/oder einzelner Komponenten des zumindest einen elektronischen Geräts auf einfache und schnell erfassbare Weise optisch anzuzeigen. Bei einem derartigen elektronischen Gerät kann es sich zum Beispiel um eine Steuerungseinrichtung, insbesondere um eine Sicherheitssteuerungseinrichtung, handeln, die auf dem Gebiet der Automatisierungstechnik eingesetzt werden kann. Wenn durch das Bedienpersonal eine Bedienaktion, wie zum Beispiel eine Bedieneingabe vorgenommen wird, ist es häufig nur erforderlich, auf einzelne Anzeigeelemente des zumindest einen elektronischen Geräts zu achten, die jeweils der aktuellen Bedieneingabe zugeordnet sind. Beispielsweise können die Anzeigeelemente als Reaktion auf die Bedienaktion des Bedienpersonals ihren Beleuchtungsstatus ändern, zum Beispiel Licht in einer anderen Farbe emittieren und/oder einen Blinkzustand ändern. Wenn das elektronische Gerät eine Vielzahl von Anzeigeelementen aufweist, ist es für das Bedienpersonal häufig schwierig, die der aktuellen Bedienaktion zugeordneten und daher besonders zu beachtenden Anzeigeelemente rasch zu erfassen. Denn zum Zeitpunkt der Bedienaktion ist keine Unterscheidung zwischen den aufgrund der Bedienaktion tatsächlich zu beachtenden Anzeigeelementen und den zu diesem Zeitpunkt nicht unmittelbar relevanten Anzeigevorrichtungen möglich.

Die vorliegende Erfindung macht es sich zur Aufgabe, eine Vorrichtung und ein Verfahren zur Steuerung einer Mehrzahl k≥2 optischer Anzeigeelemente zumindest eines elektronischen Geräts zur Verfügung zu stellen, mittels derer die Bedienbarkeit des zumindest einen elektronischen Geräts verbessert werden kann.

Die Lösung dieser Aufgabe liefert eine gattungsgemäße Vorrichtung zur Steuerung einer Mehrzahl k≥2 optischer Anzeigeelemente zumindest eines elektronischen Geräts der eingangs genannten Art mit den Merkmalen des kennzeichnenden Teils des Anspruchs 1. Hinsichtlich des Verfahrens wird diese Aufgabe durch ein Verfahren mit den Merkmalen des kennzeichnenden Teils des Anspruchs 5 gelöst. Die Unteransprüche betreffen vorteilhafte Weiterbildungen der Erfindung.

Eine erfindungsgemäße Vorrichtung zur Steuerung einer Mehrzahl k≥2 optischer Anzeigeelemente zumindest eines elektronischen Geräts zeichnet sich dadurch aus, dass die Vorrichtung zumindest eine Auswerte- und Steuereinheit umfasst, die an die Anzeigeelemente angeschlossen ist und die dazu eingerichtet ist, die Intensitäten des von den Anzeigeelementen emittierten Lichts derart zu steuern, dass die Anzeigeelemente während eines Normalbetriebs Licht mit definierten, vorzugsweise im Wesentlichen identischen, Intensitäten emittieren und dass bei einer Bedienaktion des zumindest einen elektronischen Geräts ein oder mehrere Anzeigeelemente, die der Bedienaktion zugeordnet sind, durch Änderungen der relativen Intensitäten des von den Anzeigeelementen emittierten Lichts optisch hervorhebbar sind. Unter dem Begriff "Normalbetrieb" soll in diesem Zusammenhang ein Betrieb des zumindest einen elektronischen Geräts verstanden werden, bei dem keine Bedienaktionen durch das Bedienpersonal vorgenommen werden. Die Erfindung geht von der Idee aus, bei einer Bedienaktion einzelne Anzeigeelemente, die vom Bedienpersonal besonders zu beachten sind und insoweit der Bedienaktion zugeordnet sind, durch die Änderung der relativen Intensitäten der optischen Anzeigeelemente mittels der Auswerte- und Steuereinheit, die auch die Bedienaktionen des Bedienpersonals auswerten kann, gezielt optisch hervorzuheben. Das Bedienpersonal kann somit nach einer Bedienaktion rasch erkennen, welchen Status die hervorgehobenen Anzeigeelemente, die der Bedienaktion zugeordnet sind, haben. Vorzugsweise können die Anzeigeelemente als Leuchtdioden ausgeführt sein. Leuchtdioden zeichnen sich insbesondere durch ihre Langlebigkeit sowie durch ihren relativ geringen Energieverbrauch aus. Ferner kann die Helligkeit von Leuchtdioden auf sehr einfache Weise, insbesondere durch ein Pulsweiten-Modulationsverfahren, verändert werden.

In einer vorteilhaften Ausführungsform wird vorgeschlagen, dass die Auswerte- und Steuereinheit dazu eingerichtet ist, die Intensitäten der Anzeigeelemente derart zu steuern, dass die Intensitäten derjenigen Anzeigeelemente, die der Bedienaktion zugeordnet sind, im Vergleich zum Normalbetrieb unverändert sind und die Intensitäten der übrigen Anzeigeelemente im Vergleich zum Normalbetrieb verringert sind. Die übrigen Anzeigeelemente werden in dieser Ausführungsform somit gezielt heruntergedimmt, wohingegen die vom Bedienpersonal durch die Bedienaktion zu beachtenden Anzeigeelemente Licht mit einer Intensität emittieren, die der Intensität während des Normalbetriebs des elektronischen Geräts entspricht. Die Intensität der durch die Bedienaktion vom Bedienpersonal nicht zwingend zu beachtenden Anzeigeelemente wird somit gezielt verringert, um dadurch die nicht heruntergedimmten Anzeigeelemente optisch hervorzuheben. Es besteht hierbei auch die Möglichkeit, dass die durch die Bedienaktion vom Bedienpersonal nicht zwingend zu beachtenden Anzeigeelemente von der Auswerte-und Steuereinheit vollständig deaktiviert werden. Der Status dieser Anzeigeelemente kann dann allerdings nicht mehr erfasst werden.

In einer alternativen Ausführungsform besteht die Möglichkeit, dass die Auswerte- und Steuereinheit dazu eingerichtet ist, die Intensitäten der Anzeigeelemente derart zu steuern, dass die Intensitäten derjenigen Anzeigeelemente, die der Bedienaktion zugeordnet sind, im Vergleich zum Normalbetrieb erhöht sind und die Intensitäten der übrigen Anzeigeelemente im Vergleich zum Normalbetrieb unverändert sind. Bei dieser Ausführungsform werden somit diejenigen Anzeigeelemente, die die gegenwärtige Bedienaktion betreffen und somit die Aufmerksamkeit des Bedienpersonals erfordern, gezielt heraufgedimmt, wohingegen die Intensitäten der übrigen Anzeigeelemente nicht verändert werden.

In einer weiteren alternativen Ausführungsform kann auch vorgesehen sein, dass die Auswerte- und Steuereinheit dazu eingerichtet ist, die Intensitäten der Anzeigeelemente derart zu steuern, dass die Intensitäten derjenigen Anzeigeelemente, die der Bedienaktion zugeordnet sind, im Vergleich zum Normalbetrieb erhöht sind und die Intensitäten der übrigen Anzeigeelemente im Vergleich zum Normalbetrieb verringert sind. In dieser Ausführungsform werden somit die Intensitäten aller Anzeigeelemente des elektronischen Geräts verändert.

Ein erfindungsgemäßes Verfahren zeichnet sich dadurch aus, dass die Intensitäten des von den Anzeigeelementen emittierten Lichts derart gesteuert werden, dass die Anzeigeelemente während eines Normalbetriebs Licht mit definierten, vorzugsweise im Wesentlichen identischen, Intensitäten emittieren und dass bei einer Bedienaktion des zumindest einen elektronischen Geräts ein oder mehrere Anzeigeelemente, die der Bedienaktion zugeordnet sind, durch Änderungen der relativen Intensitäten des von den Anzeigeelementen emittierten Lichts optisch hervorgehoben werden. Bei dem erfindungsgemäßen Verfahren werden somit einzelne Anzeigeelemente, die vom Bedienpersonal besonders zu beachten sind und insoweit der Bedienaktion zugeordnet sind, durch die Änderung der relativen Intensitäten der optischen Anzeigeelemente gezielt optisch hervorgehoben, so dass das Bedienpersonal somit nach der Vornahme einer Bedienaktion rasch erkennen kann, welchen Status die zu beachtenden und daher optisch hervorgehobenen Anzeigeelemente des elektronischen Geräts haben. Somit kann die Bedienung des elektronischen Geräts einfacher und intuitiver gestaltet werden.

In einer bevorzugten Ausführungsform wird vorgeschlagen, dass die Intensitäten der Anzeigeelemente derart gesteuert werden, dass die Intensitäten derjenigen Anzeigeelemente, die der Bedienaktion zugeordnet sind, im Vergleich zum Normalbetrieb nicht verändert werden und die Intensitäten der übrigen Anzeigeelemente im Vergleich zum Normalbetrieb verringert werden. Die übrigen, für die aktuelle Bedienaktion weniger relevanten Anzeigeelemente werden somit gezielt heruntergedimmt, so dass die vom Bedienpersonal nach der Bedieneingabe zu beachtenden Anzeigeelemente, deren Intensitäten im Vergleich zum Normalbetrieb nicht verändert werden, optisch hervorgehoben und vom Bedienpersonal schnell erfasst werden können. Es besteht auch die Möglichkeit, dass die durch die Bedienaktion vom Bedienpersonal nicht zwingend zu beachtenden Anzeigeelemente vollständig deaktiviert werden. Dadurch wird eine besonders starke optische Akzentuierung der nach der Vornahme der Bedienaktion zu beachtenden Anzeigeelemente erreicht.

In einer alternativen Ausführungsform kann vorgesehen sein, dass die Intensitäten der Anzeigeelemente derart gesteuert werden, dass die Intensitäten derjenigen Anzeigeelemente, die der Bedienaktion zugeordnet sind, im Vergleich zum Normalbetrieb erhöht werden und die Intensitäten der übrigen Anzeigeelemente im Vergleich zum Normalbetrieb nicht verändert werden. In dieser Ausführungsform werden somit die vom Bedienpersonal nach der Bedienaktion zu beachtenden Anzeigeelemente gezielt heraufgedimmt.

In einer weiteren alternativen Ausführungsform besteht die Möglichkeit, dass die Intensitäten der Anzeigeelemente derart gesteuert werden, dass die Intensitäten derjenigen Anzeigeelemente, die der Bedienaktion zugeordnet sind, im Vergleich zum Normalbetrieb erhöht werden und die Intensitäten der übrigen Anzeigeelemente im Vergleich zum Normalbetrieb verringert werden. Somit werden die relativen Intensitäten aller Anzeigeelemente nach der Bedienaktion verändert.

Die Erfindung betrifft gemäß einem weiteren Aspekt ferner ein elektronisches Gerät, vorzugsweise eine Steuerungseinrichtung, insbesondere eine Sicherheitssteuerungseinrichtung, umfassend eine Mehrzahl k≥2 optischer Anzeigeelemente, wobei jedes der optischen Anzeigeelemente dazu eingerichtet ist, zur optischen Anzeige eines Betriebsstatus des zumindest einen elektronischen Geräts und/oder einzelner Komponenten des zumindest einen elektronischen Geräts Licht zu emittieren, sowie eine Vorrichtung zur Steuerung der optischen Anzeigeelemente. Dieses elektronische Gerät zeichnet sich erfindungsgemäß dadurch aus, dass die Vorrichtung zur Steuerung der optischen Anzeigeelemente nach einem der Ansprüche 1 bis 4 ausgeführt ist. Dadurch wird bei einer Bedienaktion eine gezielte optische Hervorhebung einzelner Anzeigeelemente des elektronischen Geräts ermöglicht.

Gemäß noch einem weiteren Aspekt bezieht sich die vorliegende Erfindung auf ein verteiltes System, umfassend ein erstes elektronisches Gerät sowie zumindest ein zweites elektronisches Gerät, die miteinander in Kommunikationsverbindung stehen. Erfindungsgemäß zeichnet sich das verteilte System dadurch aus, dass jedes der elektronischen Geräte nach Anspruch 9 ausgeführt ist. Die Übertragung des vorstehend erläuterten Konzepts auf verteilte Systeme, die mindestens zwei elektronische Geräte aufweisen, hat den Vorteil, dass bei der Vornahme einer Bedienaktion an einem der mindestens zwei elektronischen Geräte die der Bedienaktion zugeordneten Anzeigeelemente des betreffenden elektronischen Geräts in der oben beschriebenen Weise optisch hervorgehoben werden können. Ferner können in vorteilhafter Weise die Helligkeiten der Anzeigeelemente des anderen elektronischen Geräts beziehungsweise (bei k≥3 elektronischen Geräten) der anderen elektronischen Geräte zum Beispiel gezielt reduziert werden, so dass das Bedienpersonal auf einfache Weise erfassen kann, auf welches der elektronischen Geräte des verteilten Systems sich die Bedieneingabe auswirkt.

Es soll an dieser Stelle betont werden, dass sich der grundlegende Status der Anzeigeelemente im Hinblick auf die Bedeutung der Leuchtfarbe und/oder des Blinkzustandes durch das gezielte Ändern der relativen Intensitäten der Anzeigeelemente nicht verändert. Die Veränderung der relativen Intensitäten ändert also die mittels der Anzeigeelemente visualisierten Statusinformationen des elektronischen Geräts nicht. Es werden lediglich einzelne Anzeigeelemente optisch hervorgehoben, so dass sie einfacher erfasst werden können.

Weitere Merkmale und Vorteile der vorliegenden Erfindung werden deutlich anhand der nachfolgenden Beschreibung bevorzugter Ausführungsbeispiele unter Bezugnahme auf die beiliegenden Abbildungen. Darin zeigen:
- Fig. 1: eine schematisch stark vereinfachte Darstellung eines elektronischen Geräts mit einer Vorrichtung zur Steuerung einer Mehrzahl optischer Anzeigeelemente des elektronischen Geräts in einem ersten Leuchtzustand der optischen Anzeigeelemente,
- Fig. 2: eine schematisch stark vereinfachte Darstellung des elektronischen Geräts gemäß Fig. 1 in einem zweiten Leuchtzustand der optischen Anzeigeelemente,
- Fig. 3: eine schematisch stark vereinfachte Darstellung des elektronischen Geräts gemäß Fig. 1 in einem dritten Leuchtzustand der optischen Anzeigeelemente,
- Fig. 4: eine schematisch stark vereinfachte Darstellung des elektronischen Geräts gemäß Fig. 1 in einem vierten Leuchtzustand der optischen Anzeigeelemente,
- Fig. 5: eine schematisch stark vereinfachte Darstellung eines verteilten Systems mit zwei elektronischen Geräten gemäß Fig. 1, die miteinander in Kommunikationsverbindung stehen.

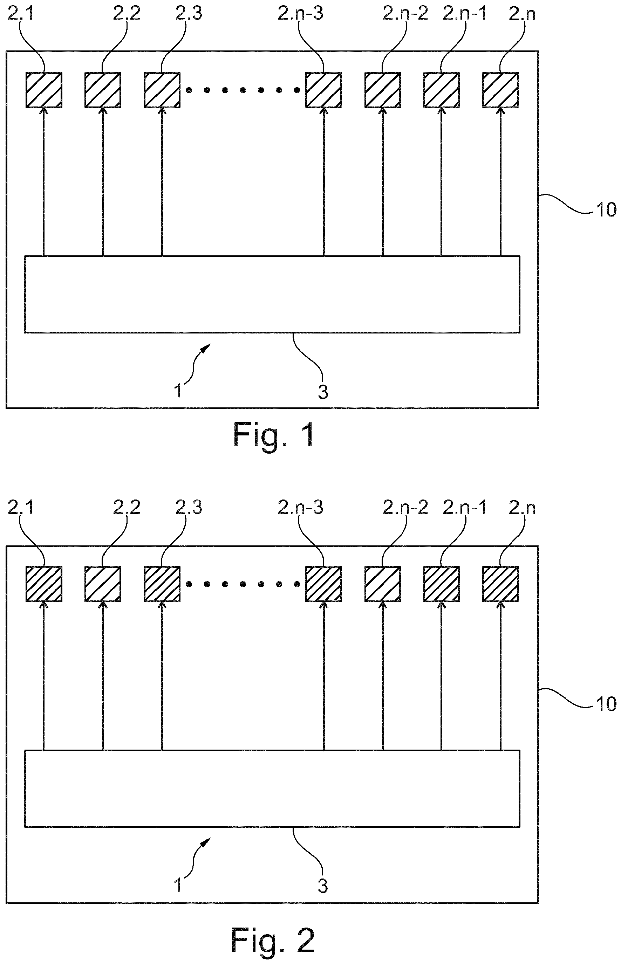

Unter Bezugnahme auf Fig. 1 weist ein elektronisches Gerät 10, das zum Beispiel eine Steuerungseinrichtung, insbesondere eine Sicherheitssteuerungseinrichtung, die auf dem Gebiet der Automatisierungstechnik einsetzbar ist, sein kann, eine Vielzahl optischer Anzeigeelemente 2.1 bis 2.n auf. Jedes dieser optischen Anzeigeelemente 2.1 bis 2.n kann zum Beispiel zumindest eine einfarbige oder zumindest eine mehrfarbige Leuchtdiode umfassen.

Mit Hilfe der optischen Anzeigeelemente 2.1 bis 2.n können einem Benutzer Informationen über einen aktuellen Status des elektronischen Geräts 10 und/oder einzelner Komponenten des elektronischen Geräts 10, welches zum Beispiel auch modular aufgebaut sein kann, optisch signalisiert werden. Beispielsweise können die Anzeigeelemente 2.1 bis 2.n während des Betriebs des elektronischen Geräts 10 Licht in unterschiedlichen Signalfarben emittieren, die verschiedenen Betriebszuständen des elektronischen Geräts 10 beziehungsweise dessen Komponenten zugeordnet sind. Somit können dem Bedienpersonal unterschiedliche Betriebszustände des elektronischen Geräts 10 beziehungsweise dessen Komponenten signalisiert werden. Dadurch ist es zum Beispiel möglich, etwaige Funktionsstörungen des elektronischen Geräts 10 beziehungsweise einzelner Komponenten des elektronischen Geräts 10 anzuzeigen. Es besteht zum Beispiel auch die Möglichkeit, dass eines oder mehrere der Anzeigeelemente 2.1 bis 2.n so angesteuert werden können, dass sie periodisch ein- beziehungsweise ausgeschaltet werden, so dass eine Blinkfunktion implementiert werden kann.

Das hier vorgestellte elektronische Gerät 10 verfügt ferner über eine Vorrichtung 1 zur Steuerung der optischen Anzeigeelemente 2.1 bis 2.n, die eine Auswerte- und Steuereinheit 3 aufweist, die an die Anzeigeelemente 2.1 bis 2.n angeschlossen ist und die dazu eingerichtet ist, den Leuchtbetrieb der optischen Anzeigeelemente 2.1 bis 2.n zu steuern. Die Auswerte- und Steuereinheit 3 ist so ausgeführt, dass sie Bedienaktionen eines Benutzers erfassen und auswerten kann und die optischen Anzeigeelemente 2.1 bis 2.n entsprechend ansteuern kann.

Während eines Normalbetriebs des elektronischen Geräts 10, in dem vom Bedienpersonal keinerlei Bedienaktionen vorgenommen werden, werden die Anzeigeelemente 2.1 bis 2.n von der Auswerte- und Steuereinheit 3 vorzugsweise in der Weise angesteuert, dass sie Licht mit einer definierten, insbesondere im Wesentlichen identischen, Intensität emittieren. Dadurch erhalten die Anzeigeelemente 2.1 bis 2.n, obwohl sie gegebenenfalls in unterschiedlichen Signalfarben leuchten können, hinsichtlich der Intensität des emittierten Lichts ein einheitliches optisches Erscheinungsbild. Im Normalbetrieb ist keines der Anzeigeelemente 2.1 bis 2.n optisch hervorgehoben.

Wenn ein Benutzer eine Bedienaktion, wie zum Beispiel eine Bedieneingabe, an dem elektronischen Gerät 10 vornimmt, ist es in vielen Fällen nur erforderlich, dass er lediglich auf den Leuchtstatus beziehungsweise die Änderungen des Leuchtstatus einzelner Anzeigeelemente 2.1 bis 2.n achten muss. Wenn alle Anzeigeelemente 2.1 bis 2.n in Betrieb sind und Licht mit einer im Wesentlichen identischen Intensität (Helligkeit) emittieren, kann es für den Benutzer somit unter Umständen schwierig sein, die während der aktuellen Bedienaktion tatsächlich relevanten Anzeigeelemente 2.1 bis 2.n rasch zu erfassen, da er diese auf den ersten Blick nicht von den übrigen, für die aktuelle Bedienaktion nicht relevanten Anzeigeelementen 2.1 bis 2.n unterscheiden kann.

Die Auswerte- und Steuereinheit 3 ist daher dazu eingerichtet, die Helligkeiten der Anzeigeelemente 2.1 bis 2.n derart zu steuern, dass abhängig von der aktuellen Bedienaktion diejenigen Anzeigeelemente 2.1 bis 2.n hervorgehoben werden, die einen Bezug zu dieser Bedienaktion haben und insoweit dieser Bedienaktion zugeordnet sind. Die Auswerte- und Steuereinheit 3 ist so ausgebildet, dass sie die relativen Lichtintensitäten der Anzeigeelemente 2.1 bis 2.n des elektronischen Geräts 10 verändern kann. Dadurch wird eine entsprechende optische Hervorhebung der während der Bedienaktion relevanten Anzeigeelemente 2.1 bis 2.n gegenüber den übrigen Anzeigeelemente 2.1 bis 2.n des elektronischen Geräts 10 erreicht. Dieses soll nachfolgend näher erläutert werden.

In Fig. 1 ist zunächst die Ausgangssituation gezeigt, in der im Normalbetrieb des elektronischen Geräts 10 alle Anzeigeelemente 2.1 bis 2.n von der Auswerte- und Steuereinheit 3 derart angesteuert werden, dass sie mit der gleichen Intensität (beziehungsweise zumindest nahezu der gleichen Intensität) leuchten. Dieses ist in Fig. 1 durch gleiche Schraffuren der betreffenden Anzeigeelemente 2.1 bis 2.n angedeutet.

Unter Bezugnahme auf Fig. 2 soll nun die Steuerung der Intensitäten der Anzeigeelemente 2.1 bis 2.n mittels der Auswerte- und Steuereinheit 3 bei einer Bedienaktion näher erläutert werden. Dabei soll angenommen werden, dass für die gegenwärtige Bedienaktion ein bestimmter Status des elektronischen Geräts 10, der durch die beiden Anzeigeelemente 2.2 und 2.n-2 repräsentiert wird, von besonderer Bedeutung ist und daher die Aufmerksamkeit des Bedienpersonals erfordert.

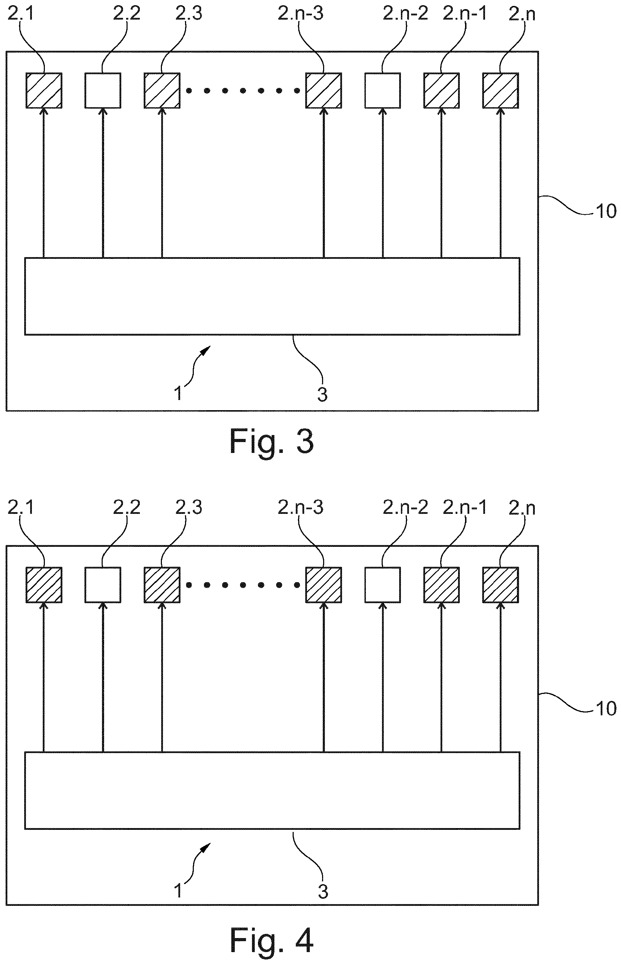

Die Steuerung der Lichtintensitäten der Anzeigeelemente 2.1 bis 2.n mittels der Auswerte- und Steuereinheit 3 kann in der Weise erfolgen, dass die Intensitäten derjenigen Anzeigeelemente 2.2 und 2.n-2, die für die gegenwärtige Bedienaktion besonders relevant sind und dieser insoweit zugeordnet sind, gegenüber der in Fig. 1 gezeigten Situation nicht verändert werden, wohingegen die Intensitäten der übrigen, weniger relevanten Anzeigeelemente 2.1, 2.3 bis 2.n-3, 2.n-1, 2.n entsprechend verringert werden. Diese Verringerung der Intensitäten wurde in Fig. 3 durch stärkere Schraffuren der Anzeigeelemente 2.1, 2.3 bis 2.n-3, 2.n-1, 2.n veranschaulicht, wohingegen die Schraffuren der beiden Anzeigeelemente 2.2 und 2.n-2, deren Intensität nicht verändert wurde, denjenigen in Fig. 1 entsprechen. Somit werden in diesem Ausführungsbeispiel diejenigen Anzeigeelemente 2.1, 2.3 bis 2.n-3, 2.n-1, 2.n, die für die aktuelle Bedienaktion weniger beachtet werden müssen, durch eine Verringerung der Lichtintensitäten abgedunkelt, so dass dadurch die beiden Anzeigeelemente 2.2 und 2.n-2 mit den im Vergleich zu Fig. 1 unveränderten Lichtintensitäten optisch hervorgehoben werden. Das Bedienpersonal kann somit nach der Ausführung einer Bedienaktion rasch erkennen, welchen Status die betreffenden, optisch hervorgehobenen Anzeigeelemente 2.2 und 2.n-2 haben. Vorzugsweise werden die bei der Bedienaktion nicht hervorzuhebenden Anzeigeelemente 2.1, 2.3 bis 2.n-3, 2.n-1, 2.n nicht vollständig abgedunkelt, sondern lediglich heruntergedimmt, so dass deren Status - wenngleich mit geringerer Lichtintensität - weiterhin vom Bedienpersonal erfasst werden kann. Somit werden die relativen Intensitäten der Anzeigeelemente 2.1 bis 2.n verändert, indem die Anzeigeelemente 2.2 und 2.n-2, die die Aufmerksamkeit des Bedienpersonals erfordern, optisch hervorgehoben werden.

Grundsätzlich besteht in dieser Ausführungsform auch die Möglichkeit, dass die nicht hervorzuhebenden Anzeigeelemente 2.1, 2.3 bis 2.n-3, 2.n-1, 2.n von der Auswerte- und Steuereinheit 3 vollständig deaktiviert (ausgeschaltet) werden, so dass nur noch die optisch hervorgehobenen Anzeigeelemente 2.2 und 2.n-2 leuchten. Ein Ablesen des Status der übrigen, nicht mehr leuchtenden Anzeigeelemente 2.1, 2.3 bis 2.n-3, 2.n-1, 2.n ist dann allerdings nicht mehr möglich.

Unter Bezugnahme auf Fig. 3 kann in einer alternativen Ausführungsform die Steuerung der Lichtintensitäten der Anzeigeelemente 2.1 bis 2.n mittels der Auswerte- und Steuereinheit 3 auch in der Weise erfolgen, dass die Intensitäten der während der Bedienaktion besonders zu beachtenden Anzeigeelemente 2.2 und 2.n-2 gegenüber dem in Fig. 1 gezeigten Zustand gezielt erhöht wird, wohingegen die Intensitäten der übrigen Anzeigeelemente 2.1, 2.3-2.n-3, 2.n-1, 2.n nicht verändert werden. Die im Vergleich zu Fig. 1 höheren Intensitäten der bei der Bedienaktion zu beachtenden Anzeigeelemente 2.2 und 2.n-2 wurde in Fig. 2 durch ein Fehlen der Schraffuren veranschaulicht. Die Schraffuren derjenigen Anzeigeelemente 2.1, 2.3 bis 2.n-3, 2.n-1, 2.n, deren Helligkeiten nicht verändert wurden, entsprechen folgerichtig den Schraffuren in Fig. 1.

In einer weiteren alternativen Variante, die in Fig. 4 dargestellt ist, ist es auch möglich, dass die Intensitäten der während der Bedienaktion besonders zu beachtenden Anzeigeelemente 2.2 und 2.n-2 von der Auswerte- und Steuereinheit 3 erhöht werden und die Intensitäten der übrigen Anzeigeelemente 2.1, 2.3-2.n-3, 2.n-1, 2.n verringert werden. Dieses wurde wiederum durch die entsprechenden Schraffuren veranschaulicht. Gegebenenfalls können die übrigen, bei der Bedienaktion weniger zu beachtenden Anzeigeelemente 2.1, 2.3-2.n-3, 2.n-1, 2.n hierbei auch deaktiviert werden.

Nach der Bedienaktion können sich die Leuchtfarben und/oder die Blinkzustände der Anzeigeelemente 2.2 und 2.n-2, die der Bedienaktion zugeordnet sind, ändern. Zu beachten ist in diesem Zusammenhang, dass sich in allen Ausführungsformen der grundlegende Status der Anzeigeelemente 2.1 bis 2.n hinsichtlich der Bedeutung der Leuchtfarben und der Blinkzustände durch die Änderung der relativen Intensitäten der Anzeigeelemente 2.1 bis 2.n zur optischen Hervorhebung bestimmter Anzeigeelemente 2.2 und 2.n-2 nicht ändert. Mit anderen Worten hat also die optische Hervorhebung bestimmter Anzeigeelemente 2.2 und 2.n-2 keinen Einfluss auf die Bedeutung der Leuchtfarben und der Blinkzustände.

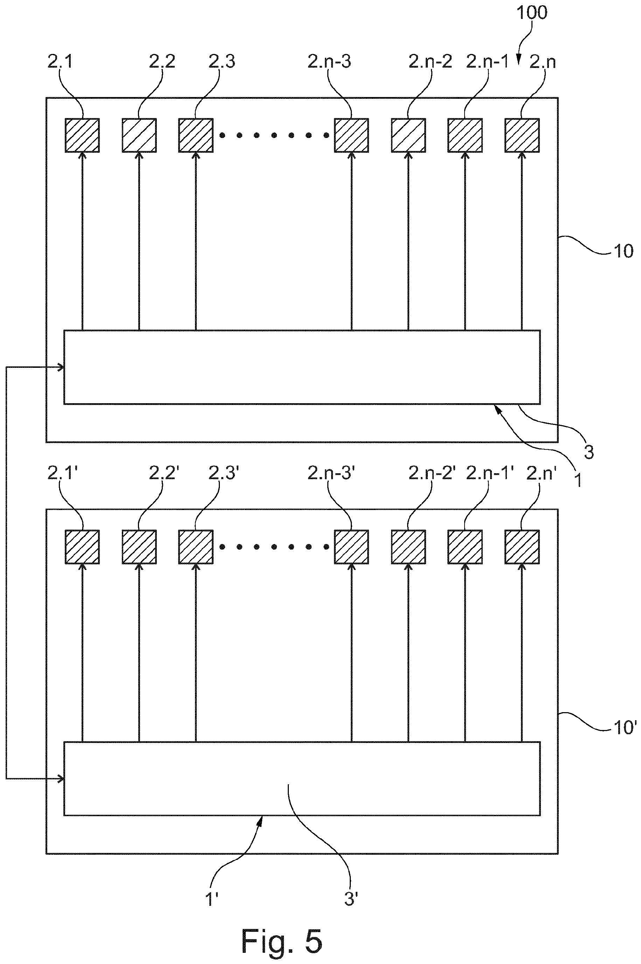

Das vorstehend erläuterte Prinzip der optischen Hervorhebung einzelner Anzeigeelemente 2.1 bis 2.n durch Änderung der relativen Intensitäten der Anzeigeelemente 2.1 bis 2.n eignet sich auch für ein verteiltes System 100, insbesondere ein Automatisierungssystem, das mindestens zwei elektronische Geräte 10, 10' der oben erläuterten Art aufweist, die in einer Kommunikationsverbindung miteinander stehen, so dass die Auswerte- und Steuereinheiten 3, 3' der Vorrichtungen 1, 1' zur Steuerung der optischen Anzeigeelemente 2.1 bis 2.n, 2.1' bis 2n' der elektronischen Geräte 10, 10' auf einem bidirektionalen Weg Informationen miteinander austauschen können. Diese Situation ist in Fig. 5 exemplarisch anhand zweier elektronischer Geräte 10, 10' dargestellt, die miteinander vernetzt sind.

Wenn durch das Bedienpersonal eine Bedienaktion ausgeführt wird, die lediglich eines der elektronischen Geräte 10, 10' des verteilten Systems 100 betrifft, können die Intensitäten der Anzeigeelemente 2.1 bis 2.n, 2.1' bis 2n' der elektronischen Geräte 10, 10' mittels der Auswerte- und Steuereinheiten 3, 3' so angepasst werden, dass bestimmte Anzeigeelemente 2.1 bis 2.n, 2.1' bis 2n' der elektronischen Geräte 10, 10' gezielt hervorgehoben werden.

Es soll an dieser Stelle angenommen werden, dass die gegenwärtige Bedienaktion ein erstes elektronisches Gerät 10 des verteilten Systems 100 betrifft und dass für diese Bedienaktion wiederum die optischen Anzeigeelemente 2.2 und 2.n-2 des ersten elektronischen Geräts 10 vom Bedienpersonal besonders zu beachten sind. In diesem Ausführungsbeispiel werden - analog zum Ausführungsbeispiel gemäß Fig. 2 - die übrigen Anzeigeelemente 2.1, 2.3-2.n-3, 2.n-1, 2.n des ersten elektronischen Geräts 10 von dessen Auswerte- und Steuereinheit 3 derart angesteuert, dass deren Intensitäten im Vergleich zum Normalbetrieb, in dem keine Bedienaktionen vorgenommen werden, verringert werden.

Demgegenüber werden die vom Bedienpersonal während der Bedienaktion zu beachtenden Anzeigeelemente 2.2 und 2.n-2 des ersten elektronischen Geräts 10 weiterhin derart angesteuert, dass sich deren Intensitäten im Vergleich zum Normalbetrieb nicht ändern. Optional können die übrigen Anzeigeelemente 2.1, 2.3-2.n-3, 2.n-1, 2.n des ersten elektronischen Geräts 10 von der Auswerte- und Steuereinheit 3 auch vollständig deaktiviert werden.

Ferner signalisiert die Auswerte- und Steuereinheit 3 des ersten elektronischen Geräts 10 der Auswerte- und Steuereinheit 3' des zweiten elektronischen Geräts 10', dass am ersten elektronischen Gerät 10 eine Bedienaktion ausgeführt wurde. Die Auswerte- und Steuereinheit 3' des zweiten elektronischen Geräts 10' ist so ausgebildet, dass sie als Reaktion darauf die Intensitäten aller Anzeigeelemente 2.1' bis 2n' des zweiten elektronischen Geräts 10' gegenüber dem Normalbetrieb verringern kann. Optional können die Anzeigeelemente 2.1' bis 2n' des zweiten elektronischen Geräts 10' auch vollständig deaktiviert werden.

Durch die vorstehend beschriebenen Maßnahmen können die vom Bedienpersonal zu beachtenden Anzeigeelemente 2.2 und 2.n-2 des ersten elektronischen Geräts 10 gegenüber den übrigen optischen Anzeigeelementen 2.1, 2.3-2.n-3, 2.n-1, 2.n des ersten elektronischen Geräts 10 sowie gegenüber allen Anzeigeelementen 2.1' bis 2n' des zweiten elektronischen Geräts 10' optisch hervorgehoben werden. Das Bedienpersonal kann somit rasch erkennen, an welchem der elektronischen Geräte 10, 10' des verteilten Systems 100 eine Bedienaktion ausgeführt wurde. Der entsprechende Status der zu beachtenden Anzeigeelemente 2.2 und 2.n-2 des ersten elektronischen Geräts 10 kann dabei sehr einfach abgelesen werden.

Abschließend soll angemerkt werden, dass auch die weiteren in Fig. 3 und 4 dargestellten Konzepte zur optischen Hervorhebung einzelner Anzeigeelemente 2.1 bis 2.n, 2.1' bis 2n' auch auf das in Fig. 5 dargestellte verteilte System 100 übertragbar sind.

## Patentansprüche

1. Vorrichtung (1, 1') zur Steuerung einer Mehrzahl k≥2 optischer Anzeigeelemente (2.1-2.n, 2.1'-2n') zumindest eines elektronischen Geräts (10, 10'), wobei jedes der Anzeigeelemente (2.1-2.n, 2.1'-2n') dazu eingerichtet ist, zur optischen Anzeige eines Betriebsstatus des zumindest einen elektronischen Geräts (10, 10') und/oder einzelner Komponenten des zumindest einen elektronischen Geräts (10, 10') Licht zu emittieren,
**dadurch gekennzeichnet, dass**
die Vorrichtung (1) zumindest eine Auswerte- und Steuereinheit (3, 3') umfasst, die an die Anzeigeelemente (2.1-2.n, 2.1'-2n') angeschlossen ist und die dazu eingerichtet ist, die Intensitäten des von den Anzeigeelementen (2.1-2.n, 2.1'-2n') emittierten Lichts derart zu steuern, dass die Anzeigeelemente (2.1-2.n, 2.1'-2n') während eines Normalbetriebs Licht mit definierten, vorzugsweise im Wesentlichen identischen, Intensitäten emittieren und dass bei einer Bedienaktion des zumindest einen elektronischen Geräts (10, 10') ein oder mehrere Anzeigeelemente (2.1-2.n, 2.1'-2n'), die der Bedienaktion zugeordnet sind, durch Änderungen der relativen Intensitäten des von den Anzeigeelementen (2.1-2.n, 2.1'-2n') emittierten Lichts optisch hervorhebbar sind.

2. Vorrichtung (1) nach Anspruch 1, **dadurch gekennzeichnet, dass** die Auswerte- und Steuereinheit (3, 3') dazu eingerichtet ist, die Intensitäten der Anzeigeelemente (2.1-2.n, 2.1'-2n') derart zu steuern, dass die Intensitäten derjenigen Anzeigeelemente (2.1-2.n, 2.1'-2n'), die der Bedienaktion zugeordnet sind, im Vergleich zum Normalbetrieb unverändert sind und die Intensitäten der übrigen Anzeigeelemente (2.1-2.n, 2.1'-2n') im Vergleich zum Normalbetrieb verringert sind.

3. Vorrichtung (1) nach Anspruch 1, **dadurch gekennzeichnet, dass** die Auswerte- und Steuereinheit (3, 3') dazu eingerichtet ist, die Intensitäten der Anzeigeelemente (2.1-2.n, 2.1'-2n') derart zu steuern, dass die Intensitäten derjenigen Anzeigeelemente (2.1-2.n, 2.1'-2n'), die der Bedienaktion zugeordnet sind, im Vergleich zum Normalbetrieb erhöht sind und die Intensitäten der übrigen Anzeigeelemente (2.1-2.n, 2.1'-2n') im Vergleich zum Normalbetrieb unverändert sind.

4. Vorrichtung (1) nach Anspruch 1, **dadurch gekennzeichnet, dass** die Auswerte- und Steuereinheit (3, 3') dazu eingerichtet ist, die Intensitäten der Anzeigeelemente (2.1-2.n, 2.1'-2n') derart zu steuern, dass die Intensitäten derjenigen Anzeigeelemente (2.1-2.n, 2.1'-2n'), die der Bedienaktion zugeordnet sind, im Vergleich zum Normalbetrieb erhöht sind und die Intensitäten der übrigen Anzeigeelemente (2.1-2.n, 2.1'-2n') im Vergleich zum Normalbetrieb verringert sind.

5. Verfahren zur Steuerung einer Mehrzahl k≥2 optischer Anzeigeelemente (2.1-2.n, 2.1'-2n') zumindest eines elektronischen Geräts (10, 10'), wobei jedes der Anzeigeelemente (2.1-2.n, 2.1'-2n') dazu eingerichtet ist, zur optischen Anzeige eines Betriebsstatus des zumindest einen elektronischen Geräts (10, 10') und/oder einzelner Komponenten des zumindest einen elektronischen Geräts (10, 10') Licht zu emittieren,
**dadurch gekennzeichnet, dass**
die Intensitäten des von den Anzeigeelementen (2.1-2.n, 2.1'-2n') emittierten Lichts derart gesteuert werden, dass die Anzeigeelemente (2.1-2.n, 2.1'-2n') während eines Normalbetriebs Licht mit definierten, vorzugsweise im Wesentlichen identischen, Intensitäten emittieren und dass bei einer Bedienaktion des zumindest einen elektronischen Geräts (10, 10') ein oder mehrere Anzeigeelemente (2.1-2.n, 2.1'-2n'), die der Bedienaktion zugeordnet sind, durch Änderungen der relativen Intensitäten des von den Anzeigeelementen (2.1-2.n, 2.1'-2n') emittierten Lichts optisch hervorgehoben werden.

6. Verfahren nach Anspruch 5, **dadurch gekennzeichnet, dass** die Intensitäten der Anzeigeelemente (2.1-2.n, 2.1'-2n') derart gesteuert werden, dass die Intensitäten derjenigen Anzeigeelemente (2.1-2.n, 2.1'-2n'), die der Bedienaktion zugeordnet sind, im Vergleich zum Normalbetrieb nicht verändert werden und die Intensitäten der übrigen Anzeigeelemente (2.1-2.n, 2.1'-2n') im Vergleich zum Normalbetrieb verringert werden.

7. Verfahren nach Anspruch 5, **dadurch gekennzeichnet, dass** die Intensitäten der Anzeigeelemente (2.1-2.n, 2.1'-2n') derart gesteuert werden, dass die Intensitäten derjenigen Anzeigeelemente (2.1-2.n, 2.1'-2n'), die der Bedienaktion zugeordnet sind, im Vergleich zum Normalbetrieb erhöht werden und die Intensitäten der übrigen Anzeigeelemente (2.1-2.n, 2.1'-2n') im Vergleich zum Normalbetrieb nicht verändert werden.

8. Verfahren nach Anspruch 5, **dadurch gekennzeichnet, dass** die Intensitäten der Anzeigeelemente (2.1-2.n, 2.1'-2n') derart gesteuert werden, dass die Intensitäten derjenigen Anzeigeelemente (2.1-2.n, 2.1'-2n'), die der Bedienaktion zugeordnet sind, im Vergleich zum Normalbetrieb erhöht werden und die Intensitäten der übrigen Anzeigeelemente (2.1-2.n, 2.1'-2n') im Vergleich zum Normalbetrieb verringert werden.

9. Elektronisches Gerät (10, 10'), umfassend eine Mehrzahl k≥2 optischer Anzeigeelemente (2.1-2.n, 2.1'-2n'), wobei jedes der optischen Anzeigeelemente (2.1-2.n, 2.1'-2n') dazu eingerichtet ist, zur optischen Anzeige eines Betriebsstatus des zumindest einen elektronischen Geräts (10, 10') und/oder einzelner Komponenten des zumindest einen elektronischen Geräts (10, 10') Licht zu emittieren, sowie eine Vorrichtung (1, 1') zur Steuerung der optischen Anzeigeelemente (2.1-2.n, 2.1'-2n'), **dadurch gekennzeichnet, dass** die Vorrichtung (1, 1') zur Steuerung der optischen Anzeigeelemente (2.1-2.n, 2.1'-2n') nach einem der Ansprüche 1 bis 4 ausgeführt ist.

10. Verteiltes System (100), umfassend ein erstes elektronisches Gerät (10) sowie zumindest ein zweites elektronisches Gerät (10'), die miteinander in Kommunikationsverbindung stehen, **dadurch gekennzeichnet, dass** jedes der elektronischen Geräte (10, 10') nach Anspruch 9 ausgeführt ist.
